# EUROPÄISCHE PATENTSCHRIFT

(11) **EP 2 130 007 B1**
(45) Veröffentlichungstag und Bekanntmachung des Hinweises auf die Patenterteilung: **08.08.2012**
(21) Anmeldenummer: 08717521.2
(22) Anmeldetag: 07.03.2008
(51) Int. Cl.: G01G 21/30

(54) **VERFAHREN ZUR UEBERWACHUNG UND/ODER ZUR BESTIMMUNG DES ZUSTANDES EINER KRAFTMESSVORRICHTUNG UND KRAFTMESSVORRICHTUNG**
METHOD FOR MONITORING AND/OR DETERMINING THE CONDITION OF A FORCE MEASUREMENT DEVICE, AND FORCE MEASUREMENT DEVICE
PROCÉDÉ POUR SURVEILLER ET/OU DÉTERMINER L'ÉTAT D'UN DISPOSITIF DYNAMOMÉTRIQUE ET DISPOSITIF DYNAMOMÉTRIQUE

(30) Priorität: 23.03.2007 DE 102007014711
(43) Veröffentlichungstag der Anmeldung: 09.12.2009
(73) Patentinhaber: Mettler-Toledo AG, 8606 Greifensee (CH)
(72) Erfinder: LOHER, Urs, CH-8967 Widen (CH); JENSEN, Kurt, CH-8832 Wollerau (CH); ZIEBART, Volker, CH-8542 Wiesendangen (CH)
(86) Internationale Anmeldenummer: PCT/EP2008/052774
(87) Internationale Veröffentlichungsnummer: WO 2008/116740

(56) Entgegenhaltungen:
- EP-A- 1 347 277
- EP-A- 1 785 703
- DE-A1- 3 709 707
- US-A- 4 953 387

## Beschreibung

Die vorliegende Erfindung betrifft ein Verfahren zur Überwachung und/oder zur Bestimmung des Zustandes einer Kraftmessvorrichtung mit mindestens einem, einen Innenraum aufweisenden Gehäuse und mit mindestens einer, im Innenraum des mindestens einen Gehäuses eingebauten Kraftmesszelle, sowie eine zur Ausführung des Verfahrens geeignete Kraftmessvorrichtung.

Unter einer Kraftmesszelle ist ein Messgrössenumformer zu verstehen, der die Eingangsgrösse Kraft in eine Ausgangsgrösse beispielsweise eine elektrische Ausgangsgrösse umformt. Insbesondere dient eine, als Wägezelle ausgebildete Kraftmesszelle zur mechanisch-elektrischen Umformung der, von einem Wägegut ausgeübten Gewichtskraft in ein elektrisches Signal.

Viele Kraftmessvorrichtungen, insbesondere gravimetrische Messgeräte wie beispielsweise Waagen, Thermogravimetriegeräte, Messgeräte zur gravimetrischen Feuchtigkeitsbestimmung, Wägemodule für Tankanlagen und Reaktorbehälter, Wägemodule und Mehrfachwägevorrichtungen in Abfüll- und Verpackungsanlagen, aber auch Drehmoment- und Beschleunigungsmessvorrichtungen werden hinsichtlich ihrer teilweise sehr aggressiven Einsatzumgebung mit wirkungsvollen Massnahmen vor Zerstörung geschützt. Diese Schutzmassnahmen sind auf die Einsatzumgebung angepasste Gehäuse, welche entsprechende Vorschriften im Bezug auf das Eindringen von Staub, Feuchtigkeit und dergleichen erfüllen müssen, wie diese beispielsweise in den Ingress Protection Ratings nach EN60529 klassifiziert sind.

Das Gehäuse weist einen Innenraum auf, in den störungsempfindliche Komponenten wie elektro-mechanischen Messumformer, Sensoren und Elektronik-Komponenten der Signalverarbeitung, aber auch störungsempfindliche, mechanische Vorrichtungen wie beispielsweise Kraftübertragungsvorrichtungen oder Hebelmechanismen angeordnet werden. Bei einer Kraftmessvorrichtung, die eine, der äusseren Kraft entgegenwirkende Gegenkraft erzeugt, also beispielsweise bei einer Kraftmessvorrichtung die auf dem Prinzip der elektro-magnetischen Kraftkompensation basiert, ist in der Regel die krafterzeugende Vorrichtung und deren Regelvorrichtung ebenfalls im Innenraum des Gehäuses angeordnet, da diese Komponenten sehr empfindlich auf äussere Störungseinflüsse reagieren.

Des Weiteren wird bei einer Kraftmessvorrichtung sowohl die äussere Kraft auf den elektro-mechanischen Messumformer im Innenraum als auch eine Gegenkraft durch eine, gegebenenfalls als Membrane ausgebildete, Durchführung in der Gehäusewand übertragen. Dazu wird in der Regel eine Kraftübertragungsvorrichtung, beispielsweise ein Gestänge eingesetzt, welches jedoch möglichst wenig durch das Gehäuse beeinträchtigt werden sollte.

Hochlast- Kraftmesszellen für Wägemodule, so genannte Tank- oder Reaktorbehälter-Wägemodule sind beispielsweise in gasdicht verschweissten, rostfreien Stahlgehäusen eingebaut. Die in solchen Gehäusen untergebrachten Kraftmesszellen arbeiten problemlos, solange das Gehäuse die das Wägesignal beeinträchtigenden Umwelteinflüsse von der Kraftmesszelle fernhält. Meistens werden die Kraftmesszellen bei undichten Gehäusen auch nicht schlagartig zerstört, es findet vielmehr eine schleichende Zerstörung statt, welche häufig erst spät festgestellt wird. Sofern die Messeinrichtung in Industrieanlagen mit hohem Automatisierungsgrad eingebaut ist, kann ein Defekt der Messeinrichtung zu langer Ausfallzeit der Anlage oder zu fehlerhaften Produkten führen.

Hochlast- Kraftmesszellen kommen auch als Wägemodule in Waagen für Lastwagen zum Einsatz. Dabei weist die Wägevorrichtung typischerweise mehrere Wägeplatten auf, welche jeweils durch vier Wägemodule gestützt werden. Diese Waagen stehen in der Regel im Ausseneinsatz und sind daher wechselnden Umweltbedingungen in besonderer Weise ausgesetzt. Durch die Exposition besteht zudem die unmittelbare Gefahr, dass diese Wägemodule durch Fehlmanipulationen, wie bewusste, nachlässige oder irrtümliche Beschädigungen oder Eingriffe, in ihrer korrekten Funktion beeinträchtigt werden.

Je nach Umgebungsbedingungen müssen die Kraftmessvorrichtungen nicht zwingend hermetisch gekapselt sein. Einfachere und kostengünstigere Gehäuse mit berührungsfreien Durchführungen wie sie beispielsweise in der DE 101 49 606 C2, in Form einer Labyrinthdichtung offenbart werden, können ebenfalls in der Industrieumgebung eingesetzt werden. Auch normale Waagengehäuse erfüllen bei entsprechenden Umgebungsbedingungen ihren Zweck. Allerdings kann durch einen Manipulationsfehler zum Beispiel Flüssigkeit ins Innere des Gehäuses eindringen und die relative Feuchte des Gehäuseinnenraumes derart erhöhen, dass Teile der Kraftmesszelle oder die Elektronik- Komponenten der Signalverarbeitung korrodieren.

Oftmals werden Kraftmessvorrichtungen bis zu ihrer Inbetriebnahme über weite Strecken transportiert und zwischengelagert. Dabei kann sich in ungeeigneter Transport- oder Lagerumgebung im Gehäuseinnern ein Kondensat bilden, das die Messperformance empfindlich beeinträchtigen kann.

Die Inspektion der Kraftmesszelle ist je nach umgebendem Gehäuse mit sehr hohem Aufwand verbunden oder gar unmöglich. Eine periodische Überprüfung der in Anlagen eingesetzten Kraftmessvorrichtungen ist aufwändig und teuer.

In der EP 1 347 277 B1 wird eine Kraftmesszelle offenbart, die zusätzlich einen Temperatursensor aufweist. Die analogen Signale der Kraftmesszelle werden mittels einer ersten Wandlerschaltung und die vom Temperaturfühler abgegebenen analogen Signale mittels einer zweiten Wandlerschaltung in zweiwertige pulsweitenmodulierte Signale gewandelt. Diese Signale werden über Verbindungsleitungen zu einem Prozessormodul übertragen und von diesem mittels aus einem Speichermodul abrufbaren Kompensationsdaten weiter verarbeitet. Durch die Verarbeitung der Kraftmesszellen- Signale mit den Temperatursensor- Signalen wird die Temperaturdrift der Wägezelle korrigiert. Durch die Behandlung des Wägesignals in dieser Art können zwar die Einwirkungen der Umwelt auf das Wägeergebnis ausreichend kompensiert werden, der eigentliche Zustand der Kraftmesszelle ist aber dadurch nicht ermittelbar.

Die DE 37 09 707 A1 offenbart eine Kraftmesszelle, bei der ein Verfahren zur automatischen Kalibrierung und/oder Linearisierung einer Waage durchführbar ist. Dabei werden zunächst Parameter - sogenannte Störgrössen - ermittelt, die einen Einfluss auf die Waage haben. Bei diesen Parametern handelt es sich um die Änderung der Temperatur und/oder den Luftdruck und/oder die Neigung der Waage. Bei Erreichen einer speziellen aus diesen Parametern ermittelten Bewertungszahl, bei deren Ermittlung der Einfluss des jeweiligen Parameters gewichtet ist, wird eine Kalibrierung und/oder Linearisierung ausgelöst, wodurch der Einfluss der Störgrösse kompensiert wird.

Die US 495 3 387 offenbart einen Gassensor, der basierend auf einer von der Hermischen leitfähigkeit des Gases abhängigen Messgrösse selektiv und quantitativ eine Komponente einer Gaszusammensetzung ermitteln kann.

Der vorliegenden Erfindung liegt daher die Aufgabe zugrunde, ein einfaches, kostengünstiges Verfahren zur Überwachung und/oder zur Bestimmung des Zustandes einer, in einem Gehäuse angeordneten Kraftmesszelle anzugeben.

Diese Aufgabe wird mit einem Verfahren und einer Kraftmessvorrichtung gelöst, welche die im unabhängigen Verfahrensanspruch 1 und im unabhängigen Vorrichtungsanspruch 11 angegebenen Merkmale aufweisen. Vorteilhafte Ausgestaltungen der Erfindung sind in weiteren, abhängigen Ansprüchen angegeben.

>

Durch eine Öffnung im Gehäuse, beispielsweise erzeugt durch ein Leck oder eine Manipulation, findet typischerweise ein verstärkter Gasaustausch zwischen dem Gas im Innenraum und dem, das Gehäuse umgebenden Gas der äusseren Atmosphäre statt. Dieser Austausch erfolgt durch den Austritt des Gases aus dem Innenraum und/oder das Eindringen des Gases der umgebenden Atmosphäre. Je nach Zustand und Zusammensetzung der inneren und äusseren Gase und der Grösse der Öffnung findet dieser Gasaustausch mehr oder weniger schnell statt.

Da folglich die Gaszusammensetzung typischerweise in direktem Zusammenhang mit der Unversehrtheit des Gehäuses steht, kann somit auf einfache Weise eine Überwachung und/oder eine Bestimmung des Zustandes des Gehäuses und damit des Zustandes der Kraftmessvorrichtung erreicht werden.

Ausserdem kann die Gaszusammensetzung im Innenraum des Gehäuses die Lebensdauer der Kraftmessvorrichtung beeinflussen. Beispielsweise können ein hoher Sauerstoffanteil oder Anteile von aggressiven Dämpfen die Oxidation, die Korrosion oder den Alterungsprozess der Kraftmessvorrichtung beschleunigen. Durch Messung der Gaszusammensetzung kann somit die Lebensdauer der Kraftmesszelle bestimmt werden.

Ferner kann nicht nur aus dem Parameter der Gaszusammensetzung sondern auch aus dessen Änderung der Zustand der Kraftmesszelle bestimmt werden. Einerseits wird dadurch die Abhängigkeit des Sensorsignals von der absoluten Grösse des Parameters der Gaszusammensetzung vermieden und anderseits kann so zwischen langsamen Änderungen der Gaszusammensetzung, beispielsweise einem Gasaustausch durch eine Gehäusedichtung, und schnellen Änderungen der Gaszusammensetzung, beispielsweise verursacht durch Korrosion oder Manipulationen am Gehäuse, deutlicher unterschieden werden.

Das Sensorsignal wird in einem Verarbeitungsschritt in einer Speichereinheit gespeichert und/oder an eine Recheneinheit und/oder an eine Ausgabe übermittelt. Durch die Speicherung kann somit der Zustand einer Kraftmessvorrichtung auch bei einer Unterbrechung der Übermittelung überwacht werden. Die gespeicherten Werte können dann zu einem späteren Zeitpunkt, beispielsweise während Unterhaltsarbeiten, Reparaturarbeiten oder forensischen Untersuchungen ausgelesen und an eine Recheneinheit und/oder an eine Ausgabe übermittelt und dort verarbeitet werden.

Durch die Übermittelung des Sensorsignals oder der gespeicherten Werte an eine Recheneinheit und/oder an eine Ausgabe kann eine aufwändige, manuelle Inspektion der Kraftmessvorrichtung vermieden werden.

Sofern der Parameter der Gaszusammensetzung auch das Wägesignal der Kraftmessvorrichtung beeinflusst, kann durch einen zusätzlichen Sensor ein dem gemessenen Parameter des Innenraumklimas entsprechendes Sensorsignal der Recheneinheit zugeführt und in der Recheneinheit mit einem oberen Benutzungsgrenzwert und/oder einem unteren Benutzungsgrenzwert verglichen werden. Bei Verletzung eines dieser Benutzungsgrenzwerte wird das Sensorsignal oder ein Ausgabesignal der Recheneinheit an eine Ausgabe übermittelt.

Selbstverständlich kann der Parameter der Gaszusammensetzung auch kontinuierlich oder periodisch und/oder zufällig ermittelt werden.

Eine kontinuierliche Erfassung der Sensorsignale hat den Vorteil, dass der ganze Signalverlauf des Sensors vorhanden ist, welcher über die Belastungshöhe und Belastungsdauer des Parameters der Gaszusammensetzung der Kraftmesszelle Auskunft gibt und dadurch zur Bestimmung des Zustandes und/oder zur Berechnung der Restlebensdauer herangezogen werden kann.

Zufällig bedeutet in diesem Zusammenhang, dass eine Signalerfassung oder Signalgenerierung nicht nach einem fixen Zeitablauf ausgelöst wird sondern beispielsweise durch einen Zufallsgenerator oder durch den Benutzer initialisiert wird. Diese Initialisierung kann die Erfassung eines einzelnen Signals verursachen, jedoch aber auch über eine vorbestimmte Zeit eine periodische Signalerfassung auslösen.

Das Sensorsignal wird und/oder ein, aus dem Verarbeitungsschritt erzeugtes Sensorsignal mit wenigstens einem Schwellwert verglichen. Nach Erfüllen mindestens eines Entscheidungskriteriums wird mindestens ein entsprechendes Ereignis registriert und an eine Speichereinheit und/oder an eine Recheneinheit und/oder an eine Ausgabe übermittelt. Dadurch kann die Menge der zu speichernden oder zu übermittelnden Daten auf ein Minimum reduziert werden. Vorzugsweise werden diese Ereignisse mit einer weltweit eindeutigen Kennung der Kraftmessvorrichtung und/oder des Sensors als auch mit einer zertifizierten Zeitmarke und/oder einer Kennung des geographischen Ortes versehen.

Unter dem Begriff Recheneinheit werden alle signalverarbeitenden Elemente wie analoge Schaltkreise, digitale Schaltkreise, integrierte Schaltkreise, Prozessoren, Computer und dergleichen verstanden, die, die durch den Sensor generierten Sensorsignale mit bereits im Sensor oder in der Recheneinheit gespeicherten oder eingestellten Werten vergleicht. Diese Werte, insbesondere Maximalwerte, Schwellwerte und Benutzungsgrenzwerte können aus Regelwerken wie nationalen oder internationalen Normen stammen, aus Vergleichsmessungen ermittelt oder vom Hersteller der Kraftmessvorrichtung festgelegt worden sein.

Maximalwerte und Schwellwerte sind meist abhängig von der Auslegung der Kraftmessvorrichtung und werden in der Regel durch den Hersteller, eventuell aber auch durch den Benutzer festgelegt. Schwellwerte können Zustandsgrenzwerte definieren, bei deren Überschreitung ein bleibender Schaden an der Wägezelle verursacht wird, dieser bleibende Schaden aber die Kraftmessvorrichtung nicht prinzipiell unbrauchbar macht. Durch erneute Kalibrierung der Kraftmessvorrichtung nach dem Überschreiten des Schwellwertes kann die Veränderung kompensiert werden. Eine mehrfache Überschreitung des Schwellwerts kann eine schrittweise Zerstörung der Kraftmessvorrichtung bedeuten, bis hin zu einem Zustand, der nicht mehr mittels einer Kalibrierung kompensiert werden kann. Dieser Zustand wird im Maximalwert ausgedrückt und abgebildet. Selbstverständlich kann ein Maximalwert auch durch ein einmaliges Ereignis erreicht werden, sofern sich, die im Innenraum des Gehäuses befindliche Gaszusammensetzung sehr stark verändert oder weitere Einwirkungen wie beispielsweise Schläge auf die Kraftmessvorrichtung zur Zerstörung derselben führen.

Ausser den Maximalwerten und Schwellwerten definieren Benutzungsgrenzwerte den Innenraumklima-Wertebereich, in welchem die Kraftmesszelle betrieben werden darf ohne die zulässigen Messergebnistoleranzen der Kraftmessvorrichtung zu verletzen. Sie können in geeigneter Form in der Recheneinheit gespeichert sein. Dabei kann die Kraftmessvorrichtung bei Bedarf auch mehrere Recheneinheiten aufweisen, beispielsweise kann für jeden eingebauten Sensor eine eigene Recheneinheit vorhanden sein.

Der Begriff Ausgabe steht für alle analog beziehungsweise digital arbeitenden Übermittlungs-, Melde- und Warnsysteme die geeignet sind, die durch den Sensor erzeugten Sensorsignale eines Parameters der Gaszusammensetzung oder ein Ausgangssignal der Recheneinheit durch geeignete Mittel wie Ton, Licht, Vibrationen, elektrische Signale, elektromagnetische Impulse, numerische Ausgaben und dergleichen mehr darzustellen oder an weitere Geräte, beispielsweise weitere Ausgaben, Leitsysteme, Terminals und dergleichen zu übermitteln. Die Ausgabe kann deshalb auch ein Transponder oder Transmitter sein, welcher die Sensorsignale und/oder Ausgangssignale beispielsweise an ein portables Gerät sendet. Mittels der Ausgabe kann eine Warnung an den Benutzer ausgegeben, das Ereignis an eine Speichereinheit weitergesendet oder sogar der Hersteller oder dessen Servicestelle beispielsweise über Internetverbindungen direkt alarmiert werden.

Alle Sensoren können aktive Systeme sein, die eine Veränderung selbständig detektieren und ein Sensorsignal oder ein registriertes Ereignis speichern und/oder an die Recheneinheit und/oder an die Ausgabe weiterleiten. Aber auch passive Sensoren sind verwendbar, wobei die Sensorsignale oder die gespeicherten Werte durch die Recheneinheit periodisch abgefragt werden. Die so erfassten Daten erlauben bereits eine grobe Berechnung der Restlebensdauer, indem bei jeder Verletzung eines Schwellwertes oder Maximalwertes ein vordefinierter Betrag von der vordefinierten Lebensdauer subtrahiert wird. Eine kontinuierliche Erfassung der Sensorsignale analog einem Signalverlauf erlaubt aufgrund der miterfassten Zeitabschnitte eine sehr genaue Berechnung der Restlebensdauer.

Die erfindungsgemässe Anordnung mindestens eines Sensors innerhalb des Wägezellengehäuses erlaubt somit den aktuellen Zustand der Wägezelle zu ermitteln und im Falle mehrerer auftretender Schwellwertverletzungen gegebenenfalls auch die Restlebensdauer zu berechnen. Dabei wird das von einem Sensor ermittelte Sensorsignal in der Recheneinheit mit wenigstens einem Schwellwert verglichen und nach Überschreiten dieses Schwellwerts 10 eine entsprechende Belastung registriert und die Summe aller Belastungen berechnet und durch Vergleich mit einem Maximalwert der zulässigen Belastungen eine zulässige Restlebensdauer berechnet.

Die Summe der Belastungen beziehungsweise die Restlebensdauer, kann entweder über die Ausgabe von der Recheneinheit oder der Speichereinheit abgefragt werden oder die Recheneinheit übermittelt automatisch bei jeder Registrierung einer entsprechenden Belastung, diese Angaben in Form von Ausgangssignalen an die Ausgabe. Dieses Ausgangssignal kann verschiedene Aktionen wie eine Alarmierung oder eine Kalibrierung auslösen, beziehungsweise den Messvorgang der Kraftmessvorrichtung unterbrechen.

Grundsätzlich ist es unerheblich, wo der Sensor innerhalb des Gehäuses installiert ist. Er kann an der Innenseite des Wägezellengehäuses oder an der Wägezelle selbst angebracht sein oder auch beispielsweise in der Platine der Signalverarbeitung integriert sein. Sogar an der Aussenseite des Wägezellengehäuses ist eine Anordnung des Sensors vorstellbar, sofern eine geeignete Verbindung zwischen dem Innenraum und dem Sensor besteht, um einen entsprechenden Parameter der Gaszusammensetzung genügend genau zu erfassen. Zum Beispiel kann der Sensor auf der Gehäuse- Aussenseite angebracht sein, wenn ein ausreichender Gasaustausch vom Innenraum zum Sensor gewährleistet ist.

In einer besonders bevorzugten Ausgestaltung wird die Summe aller Belastungen die auf die Kraftmesszelle einwirken, durch Integration
a) des gesamten Verlaufs der Sensorsignale des mindestens einen Sensors oder
b) des Verlaufs der Sensorsignale des mindestens einen Sensors nach Überschreiten eines Schwellwerts oder
c) der Zeitabschnitte während derer die Sensorsignale des mindestens einen Sensors über dem bzw. den Schwellwerten liegt,
bestimmt und gespeichert und nach Überschreiten des Maximalwerts der Zustand der Kraftmesszelle bzw. das Überschreiten des Maximalwerts gespeichert und/oder an die Ausgabe übermittelt.

Das der Ausgabe zugeführte Sensorsignal oder das Ausgangssignal der Recheneinheit kann verschiedene Aktionen wie eine Alarmierung, beispielsweise über ein Warnsystem oder ein Meldesystem auslösen und/oder einen Messvorgang der Kraftmessvorrichtung unterbrechen. Auch die Löschung einer Bereitschaftsanzeige, welche anzeigt, dass die Kraftmessvorrichtung betriebsbereit ist, ist denkbar.

In einer Weiterbildung kann das mindestens eine Sensorsignal oder das Ausgangssignal auch einen automatischen Kalibriervorgang der Kraftmesszelle auslösen oder vom Benutzer/Hersteller eine manuell durchgeführte Kalibrierung verlangen.

In einer bevorzugten Weiterbildung des Verfahrens werden zur Kontrolle des mindestens einen Sensors dessen an die Recheneinheit übermittelte Sensorsignale zumindest periodisch in der Recheneinheit durch einen Vergleich mit in der Recheneinheit gespeicherten oder durch die Recheneinheit gebildeten Verifizierungswerten und Verifizierungstoleranzwerten überprüft und beim Verletzen der Verifizierungswerte und/oder Verifizierungstoleranzwerte ein Fehler registriert und an die Ausgabe übermittelt. Die Verifizierungswerte sind abhängig vom verwendeten Sensor und werden meistens vom Hersteller des Sensors mitgeliefert. Wird während des Betriebs der Kraftmessvorrichtung beispielsweise ein Sensorsignal vom Sensor geliefert, das aufgrund der physikalischen Gegebenheiten nicht auftreten kann, wird dies durch die Verifizierung der Sensorsignale in der Recheneinheit erkannt. Des Weiteren können die Verifizierungswerte und Verifizierungstoleranzwerte auch mit Hilfe vorangegangener Sensorsignale oder mittels der Sensorsignale weiterer Sensoren festgelegt und/oder angepasst werden.

In einer besonders bevorzugten Weiterbildung wird mindestens ein Sensorsignal vor der Auslieferung der Kraftmessvorrichtung ermittelt, dieses Sensorsignal in der Recheneinheit ausgewertet und als Referenzwert gespeichert, zumindest nach der Auslieferung der Kraftmesszelle mit dem, dem Referenzwert zugeordneten Sensor mindestens ein Sensorsignal ermittelt, dieses Sensorsignal in einem Sensormesswert ausgedrückt und diesen Sensormesswert mit dem Referenzwert verglichen. Dieses Vorgehen kann der Kontrolle dienen, ob die Kraftmessvorrichtung geöffnet worden ist oder nicht.

Vorzugsweise weist die Kraftmessvorrichtung eine unabhängige Stromversorgung, insbesondere eine Stützbatterie, auf. Das ermöglicht eine kontinuierliche Versorgung der zentralen elektronischen Bauteile, insbesondere des Sensors, der Speichereinheit und der Recheneinheit, und damit eine ständige Überwachung des Zustandes der Kraftmessvorrichtung. Insbesondere kann dadurch der Zustand auch ausserhalb des eigentlichen Betriebs, also beispielsweise während des Transportes, der Lagerung, der Installation aber auch während Reparaturen und Manipulationen überwacht und aufgezeichnet werden.

Die erfindungsgemässe Vorrichtung betrifft eine Kraftmessvorrichtung mit mindestens einem, einen Innenraum aufweisenden Gehäuse, mindestens einer im Innenraum eingebauten Kraftmesszelle bei welcher der Innenraum ein, vom Gas der äusseren Atmosphäre unterscheidbares Gas aufweist und bei welcher mit mindestens einem im Innenraum des Gehäuses und/oder mindestens einem, am Gehäuse angeordneten Sensor, mit welchem mindestens ein Parameter der Gaszusammensetzung des im Innenraum befindlichen Gases und/oder dessen Änderung messbar und daraus mindestens ein entsprechendes Sensorsignal erzeugbar ist.

Das Sensorsignal ist an eine Verarbeitungsvorrichtung, insbesondere an eine Speichereinheit und/oder an eine Recheneinheit und/oder an eine Ausgabe übermittelbar.

In einer erfindungsgemässen Ausgestaltung weist der mindestens eine Sensor ein Triggerelement auf, wobei mindestens ein Schwellwert und/oder mindestens ein Benutzungsgrenzwert in Abhängigkeit mindestens eines Parameters der Gaszusammensetzung im Triggerelement abgebildet ist. Anstelle des Sensors mit Triggerelement kann die Kraftmessvorrichtung auch mindestens einen Sensor und mindestens eine Recheneinheit und/oder eine, die Ausgabe enthaltende Ausgabeeinheit und/oder einen Messumformer sowie ein die Funktion des Triggerns ausführendes Betriebsprogramm aufweisen, wobei das Betriebsprogramm mindestens einen Schwellwert und/oder mindestens einen Benutzungsgrenzwert in Abhängigkeit mindestens eines Parameters der Gaszusammensetzung aufweist und/oder im Betriebsprogramm mindestens eine Befehlssequenz zum Abfragen mindestens eines Schwellwertes und/oder eines Benutzungsgrenzwertes und/oder eines Maximalwertes aus einem Speichermodul vorhanden ist. Die Kombination eines Sensors mit Triggerelement und einer Recheneinheit mit Betriebsprogramm ist selbstverständlich auch möglich.

Vorzugsweise wird ein durch das Triggerelement getriggertes Sensorsignal in einer Speichereinheit gespeichert und/oder an eine Recheneinheit und/oder an eine Ausgabe übermittelt. Das Triggerelement selbst kann unterschiedlich aufgebaut sein, beispielsweise in Form eines Katalysators, der bei einer bestimmten Gaszusammensetzung anspricht. Selbstverständlich kann das Triggerelement auch als Analogschaltung mittels elektronischer Bauteile wie Komparatorelemente oder als digitaler Schaltkreis mit einem Mikroprozessor ausgebildet sein.

Ein durch das Betriebsprogramm getriggertes Ausgangssignal der Recheneinheit kann auch an eine Ausgabe und/oder an eine weitere Recheneinheit übermittelbar sein. Sofern die Recheneinheit der Kraftmessvorrichtung und/oder eine die Ausgabe enthaltende Ausgabeeinheit und/oder ein mit dem Sensor in Verbindung stehender Messumformer über einen Mikroprozessor verfügt, können einzelne, mehrere oder alle Verfahrensschritte des Verfahrens in einem Betriebsprogramm abgebildet werden, wobei dieses Betriebsprogramm in mindestens einer Speichereinheit, welche mit der Kraftmessvorrichtung zumindest zeitweise in Verbindung steht, abgespeichert ist.

In einer Ausführung muss das vorangehend beschriebene Betriebsprogramm nicht zwingend im Prozessor eingespeichert sein, sondern kann bei Bedarf aus einer Speichereinheit ausserhalb der Kraftmessvorrichtung abgerufen und auf den entsprechenden Prozessor aufgeladen werden.

In einer Ausgestaltung der Erfindung ist die Recheneinheit und/oder eine, die Ausgabe enthaltende Ausgabeeinheit drahtlos oder drahtgebunden mit dem mindestens einen Sensor verbunden.

In einer vorteilhaften Ausgestaltung der Erfindung ist als mindestens ein Sensor ein Sensor vorgesehen, in den ein Speichermodul und/oder ein Messumformer integriert ist. Es kann aber auch die Kraftmessvorrichtung eine Speichereinheit aufweisen, mit welcher das Sensorsignal und/oder ein, aus dem Verarbeitungschritt erzeugtes Sensorsignal und/oder die Registrierung mindestens eines, auf das Sensorsignal und/oder auf das, aus dem Verarbeitungschritt erzeugtes Sensorsignal bezogenen Ereignisses speicherbar ist.

In einer Ausgestaltung der Erfindung weist die Kraftmessvorrichtung mindestens eine unabhängige Stromversorgung, insbesondere eine Stützbatterie, auf, mit welcher die elektronischen Bauteile der Kraftmessvorrichtung, insbesondere der Sensor, die Speichereinheit und die Recheneinheit versorgbar sind.

Mit dem Sensor ist die thermische Leitfähigkeit mindestens einer der Gaskomponenten der Gaszusammensetzung messbar. Da solche Sensoren in kostengünstiger, miniaturisierter Form, insbesondere als integrierte Schaltung (IC) herstellbar sind, ergibt sich somit eine robuste, kostengünstige und zuverlässige Überwachungslösung mit unwesentlichem, zusätzlichem Platzbedarf.

In einer weiteren Ausgestaltung der Erfindung wird das Gehäuse weitgehend, gegebenenfalls mit einer Labyrinthdichtung, oder hermetisch gegen die umgebende Atmosphäre abgedichtet. Dadurch kann ein Austausch der Gase im Innenraum mit den Gasen der umgebenden Atmosphäre soweit reduziert werden, dass Konzentrationsänderungen bei einem unversehrten Gehäuse in einem akzeptablen Rahmen liegen und erst bei Beschädigungen oder Fehlmanipulationen am Gehäuse deutlich erkennbare Änderungen der Gaszusammensetzung auftreten.

Der Begriff dicht ist daher situationsabhängig zu sehen. Insbesondere kann zwar durch eine Labyrinthdichtung keine absolute Gasdichtheit erreicht werden, der Gasaustausch durch diese Dichtung lässt sich aber sehr gering halten.

Der Gasaustausch wird auch dadurch reduziert, dass der Gasdruck im Innenraum dem äusseren Atmosphärendruck, gegebenenfalls mit einer Druckausgleichsvorrichtung, insbesondere einer Membrane, weitgehend angeglichen ist. Durch diesen weitgehenden Ausgleich wird eine Druckdifferenz, und damit auch die Antriebskraft des Gasaustauschs, praktisch zu null oder auf ein akzeptables Mass reduziert. Auch in diesem Fall sind dann bei Beschädigungen oder Fehlmanipulationen am Gehäuse deutliche Änderungen der Gaszusammensetzung mittels des Sensors erkennbar.

Zusätzlich kann bei einem abgedichteten Gehäuse durch einen Vergleich der Sensorsignale der Gaskonzentration vor der Auslieferung des Herstellers und nach der Installation beim Kunden festgestellt werden, ob die Kraftmessvorrichtung zwischenzeitlich geöffnet worden ist oder nicht. Dieser Aspekt ist insbesondere bei eichfähigen Kraftmessvorrichtungen von grosser Bedeutung und stellt eine zusätzliche Sicherheit zum Siegel dar.

Der innenraum des Gehäuses kann mit einem Gas befüllt sein, bei dem sich die thermische Leitfähigkeit mindestens einer Gaskomponente der Gaszusammensetzung von der thermischen Leitfähigkeit der die Kraftmessvorrichtung umgebenden Atmosphäre deutlich unterscheidet. Als Sensor kann dann ein Sensor zur Bestimmung der thermischen Leitfähigkeit von Gasen verwendet werden, welcher die Veränderung des Parameters der Gaszusammensetzung im Innenraum infolge eines Gehäuselecks detektiert und/oder vermittels dieses Sensors ein dem Parameter Gaszusammensetzung entsprechendes Sensorsignal periodisch und/oder zufällig oder kontinuierlich erzeugt.

Insbesondere kann die Gaszusammensetzung im Wesentlichen aus den Komponenten Argon und Helium bestehen. Diese Gase haben eine deutlich verschiedene Wärmeleitung im Vergleich zu Luft. Da sie zudem innert sind, bilden diese Gase einen zusätzlichen Schutz der empfindlichen Bauteile im Gehäuse gegenüber Oxidation und/oder Korrosion.

Die Kraftmessvorrichtung kann zusätzlich zum mindestens einen Sensor einen weiteren Sensor im Innenraum des Gehäuses oder am Gehäuse zur Detektierung von Netzspannungsspitzen in einer die Kraftmesszelle speisenden Stromversorgung oder zur Detektierung des Zustandes einer autonomen Stromversorgung, insbesondere zur Überprüfung des Ladezustandes einer Stützbatterie, aufweisen.

Ferner kann die Kraftmessvorrichtung im Innenraum des Gehäuses oder am Gehäuse zusätzlich zum mindestens einen Sensor einen weiteren Sensor zur Ermittlung eines Sensorsignals in Abhängigkeit der Belastungszyklen der Kraftmesszelle aufweisen.

Anstelle eines zusätzlichen Sensors können die mechanischen Belastungen aber auch direkt in der Recheneinheit aus dem Wägesignal der Kraftmesszelle ermittelt werden.

Die Sensoren der Kraftmessvorrichtung können so ausgebildet sein, dass in jedem Sensor ein Speichermodul und/oder ein Messumformer und/oder ein Transmitter integriert ist.

Einzelheiten des erfindungsgemässen Verfahrens und der erfindungsgemässen Kraftmessvorrichtung ergeben sich anhand der Beschreibung der in den Zeichnungen dargestellten Ausführungsbeispiele. Es zeigen:
Figur 1 in schematischer Darstellung eine Kraftmessvorrichtung in Gestalt einer Waage im Schnitt, mit einem einen Innenraum aufweisenden Gehäuse und einer im Gehäuse angeordneten Kraftmesszelle, wobei der Innenraum zur Durchführung des erfindungsgemässen Verfahrens mindestens einen Sensor aufweist;
Figur 2 in schematischer Darstellung eine Kraftmessvorrichtung in Gestalt eines Tanklast- Wägemoduls im Schnitt mit einem einen Innenraum aufweisenden Gehäuse und einer im Gehäuse angeordneten Kraftmesszelle, wobei der Innenraum zur Durchführung des erfindungsgemässen Verfahrens zwei Sensoren aufweist welche über Verbindungseinrichtungen mit einer, ausserhalb des Gehäuse angeordneten Ausgabeeinheit verbunden sind;
Figur 3 den Signalverlauf eines im Innenraum des Gehäuses angeordneten Sensor zur Messung der Gaszusammensetzung, wobei in 3a der Signalverlauf, in 3b die aufsummierten Belastungen und in 3c die durch den Signalverlauf generierten Ausgabesignale beziehungsweise Ausgabemeldungen dargestellt sind,
Figur 4 den Signalverlauf eines im Innenraum des Gehäuses angeordneten Sensor zur Messung der Gaszusammensetzung, wobei in 4a der Signalverlauf und in 4 b die Änderung des Signalverlaufs und in 4c die registrierten Ereignisse von Sollwertüberschreitungen dargestellt sind,

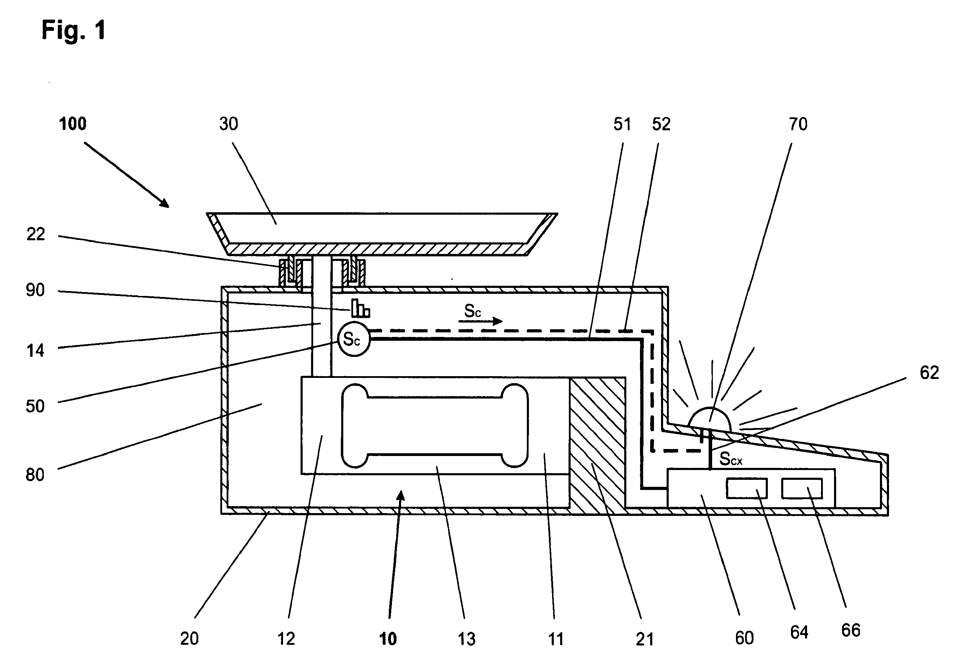

Die Figur 1 zeigt in schematischer Darstellung eine Kraftmessvorrichtung 100 beziehungsweise eine Waage im Schnitt. Eine Kraftmesszelle 10 weist einen feststehenden Teil 11 und einen Lastaufnahmeteil 12 auf, die durch einen Mittelteil 13 miteinander verbunden sind. Die Kraftmesszelle 10 ist im Innenraum 80 eines Gehäuses 20 angeordnet und mit ihrem feststehenden Teil 11 über den gehäusefesten Support 21 mit dem Gehäuse 20 starr verbunden. Ein ausserhalb des Gehäuses 20 angeordneter Lastaufnehmer 30 in Form einer Waagschale ist über ein Kraftübertragungsgestänge 14 mit dem im Innenraum 80 angeordneten Lastaufnahmeteil12 der Kraftmesszelle 10 verbunden. Das Kraftübertragungsgestänge 14 durchdringt das Gehäuse 20 berührungsfrei durch eine Gehäusedurchführung 22. Die Gehäusedurchführung 22 ist derart ausgebildet, dass ein Eindringen von Schmutz, Staub und Feuchtigkeit möglichst vermieden oder zumindest stark reduziert wird. Je nach Anwendung kann der Innenraum 80 gegenüber der Umgebung der Kraftmessvorrichtung 100 zu diesem Zweck auch einen höheren Druck aufweisen. Ferner ist im Innenraum mindestens ein Sensor 50 angeordnet, welcher mindestens einen Parameter der Gaszusammensetzung des Innenraums 90 erfasst und ein dazu korrespondierendes Sensorsignal S_{C} ermittelt. Dieses Sensorsignal S_{C} wird zwecks weiterer Verarbeitung über eine Recheneinheit-Verbindung 51 an eine Recheneinheit 60 weitergeleitet und/oder über eine Ausgabe-Verbindung 52 an eine Ausgabe 70 weitergeleitet. Die Recheneinheit 60 weist eine Speichereinheit 64 und eine zusätzliche, unabhängige Stromversorgungseinheit 66 auf, mit der auch während einer Trennung von Stromnetz, der Sensor 50, die Speichereinheit 64 und die Recheneinheit 60 mit Strom versorgt werden können. Die Recheneinheit 60 ist über die Recheneinheit- Ausgabe- Verbindung 62 mit der Ausgabe 70 verbunden und übermittelt die von der Recheneinheit 60 generierten Ausgangssignale S_{CX} an die Ausgabe 70. Diese kann entweder direkt an der Aussenseite des Gehäuses 20 angeordnet, vom Gehäuse 20 getrennt angeordnet, oder auch innerhalb des Gehäuses montiert sein, sofern die Ausbildung des Gehäuses 20 (schalldurchlässig, transparent) die Wahrnehmung der Ausgabe ermöglicht. Speziell auf die auszugebende Mitteilung oder Warnung zugeschnittene Symbole und Warnhinweise können die Übermittlung an eine Person verstärken. So ist die Verwendung allgemein bekannter Piktogramme, wie beispielsweise aus dem Strassenverkehr bekannte Signalschilder oder eigens für die entsprechende Warnung kreierte Symbole, denkbar. Mittels der Variierung der Frequenz blinkender visueller Ausgabemittel oder auch der Variierung von Lautstärke und Tonfrequenz phonetischer Ausgabemittel kann der Grad der Wichtigkeit der Warnung oder Meldung variiert werden. Jede der Verbindungen 51, 52, 62 im Ausführungsbeispiel von Figur 1 kann entweder eine Kabelverbindung wie ein Signalkabel, ein Bussystem und dergleichen, oder eine kabellose Verbindung sein.

Als besonders vorteilhaft haben sich Sensoren zur Messung der thermischen Leitfähigkeit von Gasen erwiesen. Beispielsweise eignet sich der "Sensor Micro Thermal Conductivity Sensor MTCS" der Firma Silsens SA in Neuchâtel, Schweiz in besonderer Weise für den Einsatz in Kraftmessvorrichtungen. Dieser Sensortyp kann für Gasmischungen, welche mehr als zwei Komponenten aufweisen, auch dann eingesetzt werden, wenn eine interessierende Komponente eine thermische Leitfähigkeit oder Wärmeleitfähigkeit aufweist, die sich wesentlich von der thermischen Leitfähigkeit der anderen Komponenten unterscheidet. Diese Gasmischungen werden als quasi binäre Mischungen bezeichnet.

Sobald sich ein Parameter der Gaszusammensetzung 90 verändert oder den vom Hersteller definierten zulässigen Wert übersteigt, wird das Ereignis registriert und/oder in der Speichereinheit 64 gespeichert und/oder ein Sensorsignal S_{c} oder ein Ausgangssignal S_{CX} an die Ausgabe 70 übermittelt und dort entsprechend angezeigt. Dies kann ein Alarmton, eine optische Ausgabe wie ein Blinklicht oder eine, auf einem Display dargestellte Warnung oder Information sein.

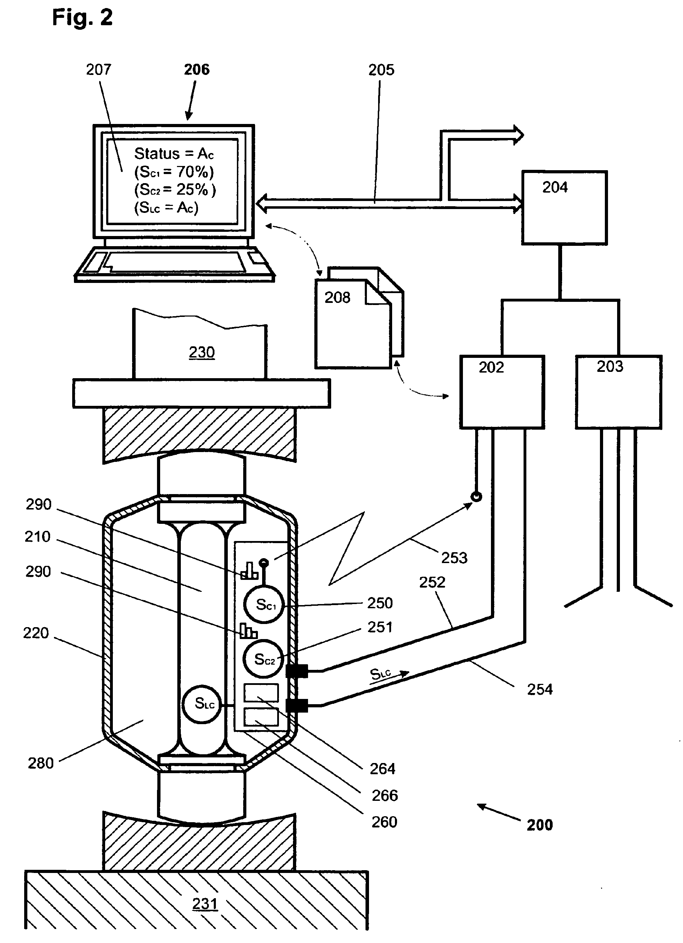

Figur 2 zeigt eine nach dem erfindungsgemässen Verfahren überwachte Kraftmessvorrichtung 200 in Form eines Tanklast- Wägemoduls. Tanklast-Wägemodule werden insbesondere in Industrieanlagen zur Verwiegung des Inhalts von Becken, Tanks, Reaktorbehältern und dergleichen verwendet. Üblicherweise werden pro zu verwiegendem Behälter mehrere Wägemodule zwischen den Füssen des Behälters 230 und dem Fundament 231 angeordnet. Dadurch steht jeder Fuss des Behälters auf einer Kraftmessvorrichtung 200. Um das Gewicht des Behälters und/oder dessen Inhalt zu ermitteln, müssen die von den Kraftmessvorrichtungen 200 erzeugten Wägesignale S_{LC} addiert werden, da es sich um die Wägesignale S_{LC} von Teilmassen handelt. Deshalb weisen die Kraftmessvorrichtungen 200 in Form von Wägemodulen in der Regel keine Ausgabe auf. Die Wägesignale S_{LC} der einzelnen Kraftmessvorrichtungen 200 eines Behälters werden beispielsweise an eine Recheneinheit 206 in Form eines Leitrechners übermittelt, dort ausgewertet und auf der im Leitrechner integrierten Ausgabe 207, meistens als Teil einer Anlageübersicht dargestellt.

Die Kraftmessvorrichtung 200 weist eine Kraftmesszelle 210 auf, welche von einem Gehäuse 220 umschlossen ist. Das Gehäuse 220 ist in der Regel mit der Kraftmesszelle 210 verschweisst und gegenüber der Umgebung der Kraftmessvorrichtung 200 dicht verschlossen. Im Messeinsatz wird sowohl die Kraftmesszelle 210 als auch das Gehäuse 220 elastisch gestaucht. Der Einfluss des Gehäusewiderstandes auf das Wägesignal S_{LC} ist teilweise kompensierbar und die Hysterese des Wägemoduls bezogen auf den Messbereich vernachlässigbar. Die Parameter der Gaszusammensetzung im Innenraum 290 werden mittels zwei Sensoren 250 und 251 detektiert und/oder gemessen. Beispielweise kann mit dem ersten Sensor die thermische Leitfähigkeit von Argon und mit dem zweiten Sensor die thermische Leitfähigkeit von Sauerstoff gemessen werden. Diese Sensoren 250, 251 sind über Anschluss-Verbindungen 252 und/oder Funkverbindungen 253, Transmitter 202, Messumformer 203, einen Segmentkoppler 204 und ein Bussystem 205 mit einer Recheneinheit 206 verbunden. Das Wägesignal S_{LC} der Kraftmesszelle 210 kann entweder über diese Verbindungen oder über eine eigene Wägesignal- Verbindung 254 an die Recheneinheit 206 übertragen werden.

In Figur 2 weist die Kraftmessvorrichtung 200 im Innenraum des Gehäuses 280 zwei Sensoren 251 und 250 auf. Die unabhängig voneinander betreibbaren Sensoren 250, 251 haben entsprechend der Parameter der Gaszusammensetzung im Innenraum 290 Messwerte an die Recheneinheit 206 übermittelt. Diese Messwerte könnten aber auch zu einem früheren Zeitpunkt erfasst, in den Sensoren 250, 251 oder der Speichereinheit 264 gespeichert und zu einem späteren Zeitpunkt an die Recheneinheit 206 übermittelt werden. Dabei können Sensoren 250, 251 und die Speichereinheit 264 und gegebenenfalls weitere elektrische Bauteile durch eine zusätzliche, unabhängige Stromquelle 266 versorgt werden. Die Recheneinheit 206 in Figur 2 ist beispielsweise der Leitrechner eines Prozessleitsystems. Je nach Konfiguration der Kraftmessvorrichtung 200 und der Recheneinheit 206 übermitteln die Sensoren 250, 251 selbständig kontinuierlich oder periodisch und/oder zufällig oder nach Auftreten einer Veränderung entsprechende Sensorsignale S_{C1}, S_{C2} an die Recheneinheit 206. Selbstverständlich kann die Recheneinheit 206 die Sensorsignale S_{C1}, S_{C2} auch bei den Sensoren 250, 251 kontinuierlich, periodisch oder nach dem Zufallsprinzip abrufen. Die Sensoren 250, 251 haben eine Veränderung der Parameter der Gaszusammensetzung im Innenraum 290 festgestellt (S_{C1}= 70%, S_{C2}=25%), welche auf ein Leck im Gehäuse hinweist. Da pro Behälter mehrere Kraftmessvorrichtungen 200 verwendet werden, können die Sensorsignale S_{C1}, S_{C2} der jeweils anderen Kraftmessvorrichtungen 200 zur Verifizierung der Sensorsignale S_{C1}, S_{C2} einer Kraftmessvorrichtung 200 herangezogen werden. Die Werte zur Verifizierung können aber auch bereits im Sensor 250, 251 oder in der Recheneinheit 206 eingespeichert sein. Diese entstammen beispielsweise aus publizierten Tabellen, deren Werte aus anderen Geräten oder aus Internetdaten stammen. So sind zum Beispiel, gültig für den entsprechenden Einsatzort der Kraftmessvorrichtung, Angaben wie Druck-, Temperatur- und Strahlungsbereiche oder Angaben über Erdbeben- Vibrationen bekannt und können zur Verifizierung der Sensorsignale verwendet werden. Sofern ein Teil der Sensorsignale S_{C1}, S_{C2} in der Recheneinheit 206 im Sinne einer Historie gespeichert wird, kann die Analyse dieser Historie zu weiteren Erkenntnissen über den Zustand sowohl der Kraftmesszellen 210 als auch der Sensoren 251, 252 dienen. Die Verifizierungswerte und Verifizierungstoleranzwerte sind abhängig vom verwendeten Sensor und werden meistens vom Hersteller des Sensors mitgeliefert. Wird während des Betriebs der Kraftmessvorrichtung beispielsweise ein Sensorsignal S_{C1,} S_{C2} vom Sensor geliefert, das aufgrund der physikalischen Gegebenheiten nicht auftreten kann, wird dies durch die Verifizierung der Sensorsignale S_{C1}, S_{C2} in der Recheneinheit 206 erkannt. Des Weiteren können die Verifizierungswerte und Verifizierungstoleranzwerte auch mit Hilfe vorangegangener Sensorsignale S_{C1}, S_{C2} oder mittels der Sensorsignale S_{C1}, S_{C2} weiterer Sensoren festgelegt und/oder angepasst werden.

Das erfindungsgemässe Verfahren kann mittels zentralisierten und/oder dezentralisierten Teilen einer Steuervorrichtung einer Anlage, beispielsweise mit der Recheneinheit 206 und/oder den Messumformern bzw. Transmittern 202, 203 durchgeführt werden, die dazu mit den entsprechenden Betriebsprogrammen 208 versehen sind. Beispielsweise kann der Zustand des Sensors 250 ausschliesslich auf der Ausgabe 207 der Recheneinheit 206 oder auf den Messumformern bzw. Transmittern 202, 203 angezeigt werden. Möglich ist jedoch auch eine Aufgabenteilung zwischen den verschiedenen Ebenen der Prozesssteuerung. Durch geeignete Massnahmen kann das erfindungsgemässe Verfahren somit auf beliebigen ein- oder mehrstufigen Anlagen mit geringem Aufwand implementiert werden. Messumformer und Transmitter 202, 203 können auch in einem mobilen Gerät eingebaut sein, mit dessen Hilfe die einzelnen Werte der Sensoren 250, 251 über Funkverbindungen 253 abgefragt werden. Dazu müssen die einzelnen Sensoren 250, 251 über einen Identifikationscode verfügen, wie dies im Stand der Technik für viele Anwendungen bekannt ist und verwendet wird.

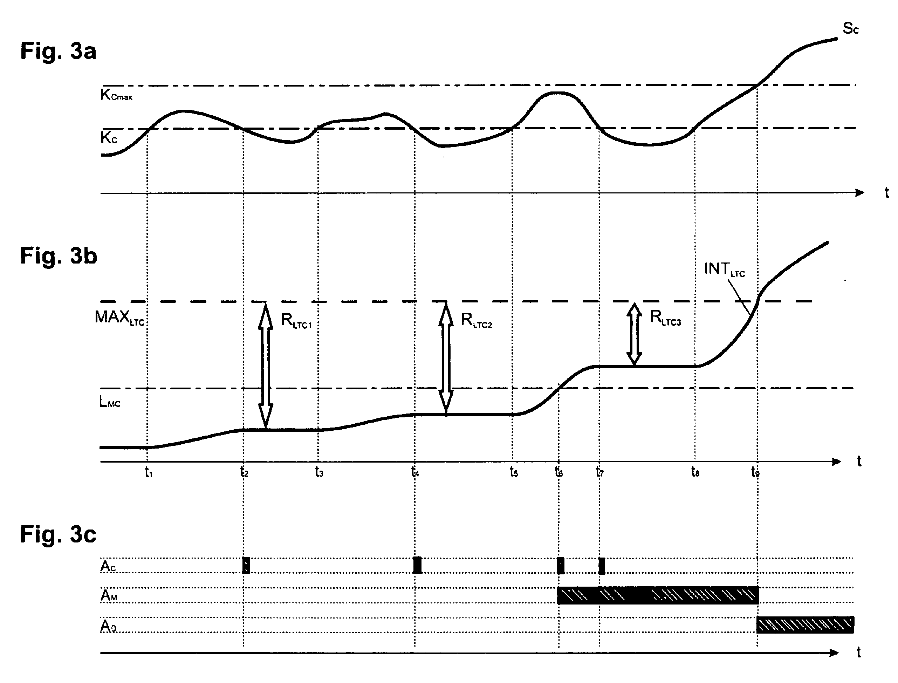

In Figur 3 ist die aus den kontinuierlich erfassten Sensorsignalen S_{C} gebildete Verlaufskurve eines Parameters der Gaszusammensetzung im Innenraum des Gehäuses des aus Figur 1 bekannten Sensors 50, und die durch die Sensorsignale S_{C} generierten Ausgabesignale beziehungsweise Ausgabemeldungen A_{C}, A_{M}, A_{D} dargestellt. In Figur 3a überschreitet der Sensorsignalverlauf in den Zeitpunkten t₁, t₃, t₅, t₈ einen Schwellwert K_{C}. Dieser stellt den Grenzwert dar, bei dessen Überschreitung die Gaszusammensetzung im Innenraum so stark von den definierten Bedingungen abweicht, dass infolge von Korrosionserscheinungen an Teilen der Kraftmesszelle 10 oder der Signalverarbeitung das Wägesignal beeinflusst, und die Kraftmesszelle 10 allmählich zerstört wird. Die Grösse des Schwellwerts K_{C} hängt einerseits von der im Innenraum 80 der Kraftmessvorrichtung 100 vorhandenen Gaszusammensetzung, andererseits von der Aggressivität des eindringenden Mediums ab und kann vom Hersteller fallbezogen festgelegt werden, beispielsweise:
- Argon-Konzentration: 50%
- Helium-Konzentration: 25%
- Sauerstoff-Konzentration 25%
- Wasserstoff-Konzentration: 0,5 ppm

Sobald der Schwellwert K_{C} wie in den Zeitpunkten t₂, t₄, t₇ unterschritten wird, wird der Zustand stabilisiert und die Zerstörung im Innenraum 80 der Kraftmessvorrichtung 100 schreitet nicht weiter voran. Wie in Figur 3c dargestellt ist, kann bei der Unterschreitung des Schwellwertes K_{C} eine Kalibrierung A_{C} über die Ausgabe verlangt oder automatisch eine Kalibrierung ausgelöst werden.

Ferner kann auch ein Maximalwert K_{Cmax} definiert werden, bei dessen Überschreitung beispielsweise die Kraftmesszelle 10 und die elektronischen Komponenten innerhalb kürzester Zeit zerstört werden.

Die Überschreitungen des Schwellwertes K_{C} und des Maximalwertes K_{Cmax} in Abhängigkeit der Überschreitungszeit (t₂- t₁; t₄ - t₃ ; t₇ - t₅ ;...) werden wie in Figur 3b dargestellt, als Belastungen INT_{LTC} registriert und aufsummiert. Die aufsummierten Belastungen INT_{LTC} werden mit dem durch Versuche ermittelten Lebensdauergrenzwert MAX_{LTC} verglichen und daraus die Restlebensdauer R_{LTC1}, R_{LTC2}, R_{LTC3} errechnet. Diese wird an die Ausgabe 70 übermittelt oder in der Recheneinheit gespeichert.

Wie in Figur 3b dargestellt, können noch weitere Grenzwerte definiert werden. Als Beispiel sei der Wartungsgrenzwert L_{MC} genannt, bei dessen Überschreitung ein Warnhinweis und/oder eine Wartungsaufforderung AM an die Ausgabe 70 weitergeleitet wird (Figur 3c). Des Weiteren kann bei der Überschreitung des Wartungsgrenzwertes L_{MC} im Zeitpunkt t₆ beispielsweise die Messwertausgabe der Kraftmesszelle blockiert, die Genauigkeitsklasse der Waage heruntergestuft, Messwertausdrucke mit Warnhinweisen versehen und/oder über Internetverbindungen der Hersteller automatisch informiert werden. Diese Aufzählung soll nicht als abschliessend verstanden werden, da in diesem Zusammenhang noch viele weitere Aktionen und Ausprägungen der Ausgabe möglich sind.

Sobald die Belastungen INT_{LTC} den Lebensdauergrenzwert MAX_{LTC} überschreiten, wird wie in Figur 3c dargestellt, ein entsprechender Signalwert A_{D} an die Ausgabe übermittelt, welcher die wahrscheinlich endgültige innere Zerstörung der Kraftmessvorrichtung anzeigt. Der Signalwert A_{D} blockiert sinnvollerweise auch die Ausgabe, so dass der weitere Einsatz der Kraftmessvorrichtung verhindert wird.

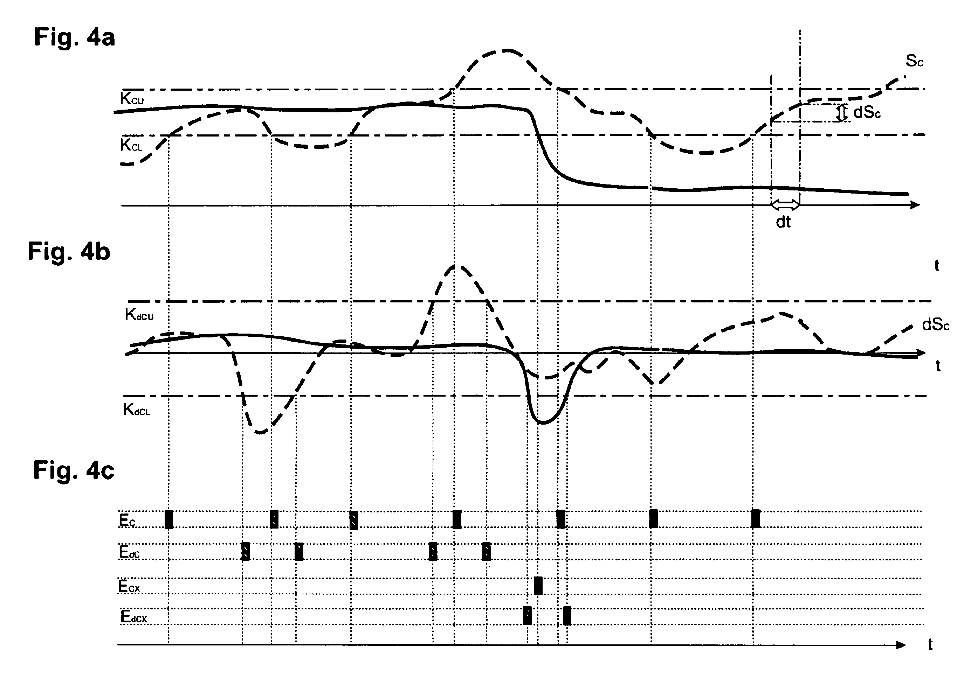

In Figur 4 ist eine aus den kontinuierlich erfassten Sensorsignalen S_{C} gebildete Verlaufkurve eines Parameters der Gaszusammensetzung eines im Innenraum des Gehäuses angeordneten Sensors, sowie die durch die Sensorsignale S_{C} in der Recheneinheit generierten Ausgabesignale beziehungsweise Registrierungen der Ereignisse E_{C}, E_{dC} dargestellt. Der Parameter der Gaszusammensetzung in Figur 4a unterschreitet teilweise einen unteren Schwellwert K_{CL} und überschreitet teilweise einen oberen Schwellwert K_{CU}.

Ferner kann, wie in Figur 4a dargestellt, aus dem Verlauf der Sensorsignale S_{C} die zeitliche Änderung dS_{C} bestimmt werden, indem die Differenz aus zwei, um die Zeitspanne dt zeitlich versetzt ermittelten Signalwerten gebildet wird. Die Änderungen dS_{C} können für alle Abschnitte des Signalverlaufs S_{C} berechnet und ebenfalls mit einem unteren Schwellwert K_{dCL} und einem oberen Schwellwert K_{dCU} verglichen werden. Auch in diesem Fall werden diese Schwellwerte teilweise unterschritten beziehungsweise teilweise überschritten, was die Registrierung entsprechender Ereignisse E_{dC} bewirkt. Als gestrichelte Linie ist der Verlauf des Messsignals bei wechselnder Gaszusammensetzung im Innenraum dargestellt. Die Situation kann beispielsweise bei unterschiedlichen Arbeitsumgebungen oder während Reparaturarbeiten und Manipulationen am Gehäuse entstehen.

Figur 4b zeigt die zeitliche Veränderung des Signalverlaufs S_{C}. Auch bei diesem Verlauf wird das Überschreiten und Unterschreiten von Schwellwerten überwacht. Der gestrichelt gezeichnete Verlauf entspricht dem gestrichelt gezeichneten Verlauf von Figur 4a.

Figur 4c zeigt die Registrierungen der Ereignisse E_{C}, E_{dC}, E_{CX} und E_{dCX} wie sie beispielsweise in der Speichereinheit 66, 266 gespeichert und/oder an die Recheneinheit 60, 260 und/oder die Ausgabe 70 übermittelt werden können. Dabei entsprechen die Ereignisse E_{CX} und E_{dCX} dem durchgezogen gezeichneten Signalverlauf und die Ereignisse E_{C} und E_{dC} dem gestrichelt gezeichneten Signalverlauf der Figuren 4a und 4b.

Die vorliegende Erfindung birgt noch weitere Vorteile, welche nur indirekt die Zustandserfassung betreffen. So können geeignete, von dem mindestens einen Sensor generierte Sensorsignale auch zur Korrektur des Messergebnisses herangezogen werden, um die Anordnung zusätzlicher Messfühler zu vermeiden, wie sie beispielsweise im Stand der Technik zur Kompensation von Hysterese- und/oder Drifterscheinungen verwendet werden.

Ausserdem könnten Benutzungsgrenzwerte in geeigneter Form in der Recheneinheit gespeichert sein. Als Benutzungsgrenzwerte sind beispielsweise festgelegt:
- Luftdruckgrenzen nach OIML R60: +95kPa bis +105kPa
- Temperaturgrenzen nach OIML R60: Klasse II, +10°C bis +30°C
- Klasse III, -10°C bis +40°C

Die Benutzungsgrenzwerte definieren den Innenraumklima-Wertebereich, in welchem die Kraftmesszelle betrieben werden darf ohne die zulässigen Messergebnistoleranzen der Kraftmessvorrichtung zu verletzen.

Die Ausführungsbeispiele in der Beschreibung sollen nicht dahingehend verstanden werden, dass die vorliegende Erfindung auf die Anordnung von nur einer Zelle in nur einem Gehäuse limitiert ist. Es liegt im Verständnis des Fachmannes, die Erfindung ebenso in Anordnungen anzuwenden, die mindestens zwei Wägezellen in einem Gehäuse beinhalten. Des Weiteren spielt die Koordination von Messungen und Warnungen im Bezug auf den Erfindungsgegenstand keine Rolle. Sowohl Meldungen / Warnungen in "Echtzeit" als auch Meldungen / Warnungen zeitlich zu den Messungen versetzt sind möglich.

### Bezugszeichenliste

- 210, 10: Kraftmesszelle
- 11: feststehender Teil
- 12: Lastaufnahmeteil
- 13: Mittelteil
- 14: Kraftübertragungsgestänge
- 220,20: Gehäuse
- 21: gehäusefester Support
- 22: Gehäusedurchführung
- 30: Lastaufnehmer
- 250, 251, 50: Sensor zur Messung der Gaszusammensetzung
- 51: Recheneinheit- Verbindung
- 52: Ausgabe- Verbindung
- 260,60: Recheneinheit
- 62: Recheneinheit- Ausgabe- Verbindung
- 264, 64: Speichereinheit
- 266, 66: Stromversorgungseinheit
- 70: Ausgabe
- 280, 80: Innenraum
- 290, 90: Parameter der Gaszusammensetzung
- 200, 100: Kraftmessvorrichtung
- 202: Transmitter
- 203: Messumformer
- 204: Segmentkoppler
- 205: Bussystem
- 206: Recheneinheit / Leitrechner
- 207: Ausgabe / LeitrechnerAusgabe
- 208: Betriebsprogramm
- 230: Behälterfuss
- 231: Fundament
- 252: Anschluss- Verbindung
- 253: Funk- Verbindung
- 254: Wägesignal- Verbindung

## Patentansprüche

1. Verfahren zur Überwachung und/oder zur Bestimmung des Zustandes einer Kraftmessvorrichtung (100, 200) mit mindestens einem-einen Innenraum (80, 280) aufweisenden Gehäuse (20, 220) und mit mindestens einer im Innenraum (80, 280) des mindestens einen Gehäuses (20, 220) eingebauten Kraftmesszelle (10, 210), wobei der Innenraum (80, 280) weitgehend mit einem vom Gas der äusseren Atmosphäre unterscheidbaren Gas gefüllt ist, **dadurch gekennzeichnet, dass** mindestens ein Sensor (50, 250, 251) im Innenraum (80, 280) des Gehäuses (20, 220) und/oder am Gehäuse (20, 220) und mit dem Innenraum (80, 280) in Verbindung stehend einen aus leichenden Gasaustausch vom lnnenraum zum Sensor (50, 250, 251) gewährleislend angeordnet ist, wobei Vermittels des Sensors (50, 250, 251)
• mindestens ein Parameter der Gaszusammensetzung (90, 290) des im Innenraum (80, 280) befindlichen Gases und/oder dessen Änderung vermittels der thermischen Leitfähigkeit mindestens einer im Innenraum vorhandenen Gaskomponente gemessen wird,
• daraus mindestens ein entsprechendes Sensorsignal (S_{C}) gebildet wird
• das Sensorsignal (S_{C}) in einer Speichereinheit (64, 264) gespeichert und/oder an eine Recheneinheit (60, 206, 260) und/oder an eine Ausgabe (70, 207) übermittelt wird,
• das Sensorsignal (S_{C}) in der Recheneinheit (60, 206, 260) mit wenigstens einem Schwellwert (K_{C}) verglichen wird und nach Überschreiten dieses Schwellwerts (K_{C})
eine entsprechende Belastung registriert und die Summe aller Belastungen (INT_{LTC}) berechnet und durch Vergleich mit einem Maximalwert (MAX_{LTC}) der zulässigen Belastungen eine zulässige Restlebensdauer (R_{LTC}) berechnet wird.

2. Verfahren nach Anspruch 1, **dadurch gekennzeichnet, dass** das Sensorsignal (S_{C}) und/oder ein-aus einem Verarbeitungschritt erzeugtes Sensorsignal (S_{CX}) mit wenigstens einem Schwellwert (K_{C}) verglichen wird und nach Erfüllen mindestens eines Entscheidungskriteriums mindestens ein entsprechendes Ereignis (E_{C}) registriert und an die Speichereinheit (64, 264) und/oder an die Recheneinheit (60, 206, 260) und/oder an die Ausgabe (70) übermittelt wird.

3. Verfahren nach Anspruch 1 oder 2, **dadurch gekennzeichnet, dass** der Parameter der Gaszusammensetzung (90, 290) kontinuierlich oder periodisch und/oder zufällig ermittelt wird.

4. Verfahren nach einem der Ansprüche 1 bis 3, **dadurch gekennzeichnet, dass** die Summe aller Belastungen (INT_{LTC}), die auf die Kraftmessvorrichtung (100, 200) einwirken, durch Integration
a) des gesamten Verlaufs der Sensorsignale (S_{C}) oder
b) des Verlaufs der Sensorsignale (S_{C}) nach Überschreiten eines Schwellwerts (K_{C}) oder
c) der Zeitabschnitte ((t₂-t₁), (t₄-t₃), (t₇-t₅)), während derer die Sensorsignale (S_{C}) über dem bzw. den Schwellwerten (K_{C}) liegen,
bestimmt wird und dass nach Überschreiten des Maximalwerts (MAX_{LTC}) der Zustand der Kraftmessvorrichtung (100, 200) beziehungsweise das Überschreiten des Maximalwerts (MAX_{LTC}) gespeichert oder an die Ausgabe übermittelt wird.

5. Verfahren nach einem der Ansprüche 1 bis 4, **dadurch gekennzeichnet, dass** das der Ausgabe (70, 207) zugeführte Sensorsignal (S_{C}) oder das Ausgangssignal der Recheneinheit (S_{CX}) eine Alarmierung auslöst und/oder einen Messvorgang unterbricht und/oder eine Bereitschaftsanzeige löscht.

6. Verfahren nach einem der Ansprüche 1 bis 5, **dadurch gekennzeichnet, dass** das mindestens eine Sensorsignal (S_{C}) oder das Ausgangssignal der Recheneinheit (S_{CX}) einen automatischen Kalibriervorgang (A_{C}) der Kraftmesszelle (10, 210) auslöst oder vom Benutzer eine manuell durchgeführte Kalibrierung (M_{C}) verlangt.

7. Verfahren nach einem der Ansprüche 1 bis 6, **dadurch gekennzeichnet, dass** die Summe der Belastungen beziehungsweise die Restlebensdauer (R_{LTC}) über die Ausgabe (70,207) von der Recheneinheit (60, 206, 260) oder der Speichereinheit (64, 264) abgefragt wird oder die Recheneinheit (60, 206, 260) automatisch bei jeder Registrierung einer entsprechenden Belastung, diese Angaben in Form von Ausgangssignalen an die Ausgabe (70,207) übermittelt.

8. Verfahren nach einem der Ansprüche 1 bis 7, **dadurch gekennzeichnet, dass** zur Kontrolle des mindestens einen Sensors (50, 250, 251) dessen an die Recheneinheit (60, 206, 260) übermittelte Sensorsignale (S_{C}) zumindest periodisch in der Recheneinheit (60, 206, 260) durch einen Vergleich mit in der Recheneinheit (60, 206, 260) gespeicherten Verifizierungswerten und Verifizierungstoleranzwerten überprüft wird und bei Abweichung von diesen Verifizierungswerten oder beim Verletzen der Verifizierungstoleranzwerte ein Fehler registriert und an die Ausgabe (70, 207) übermittelt wird.

9. Verfahren nach einem der Ansprüche 1 bis 8, **dadurch gekennzeichnet, dass** mindestens ein Sensorsignal (S_{C}) vor der Auslieferung der Kraftmessvorrichtung (100, 200) ermittelt wird, dieses Sensorsignal (S_{C}) in der Recheneinheit als Referenzwert gespeichert wird, und dass zumindest nach der Auslieferung der Kraftmesszelle mit dem dem Referenzwert zugeordneten Sensor (50, 250, 251) mindestens ein Sensorsignal (S_{C}) ermittelt wird und dieses Sensorsignal (S_{C}) mit dem Referenzwert verglichen wird.

10. Verfahren nach einem der Ansprüche 1 bis 9, **dadurch gekennzeichnet, dass** die elektronischen Bauteile der Kraftmessvorrichtung (100, 200), insbesondere der Sensor (50, 250, 251), die Speichereinheit (64, 264) und die Recheneinheit (60, 260), von einer zusätzlichen, unabhängigen Stromversorgungseinheit (66, 266), insbesondere einer Stützbatterie, mit Strom versorgt werden.

11. Kraftmessvorrichtung (100, 200) zur Durchführung des Verfahrens gemäss Anspruch 1 mit mindestens einem-einen Innenraum (80, 280) aufweisenden Gehäuse (20, 220) und mindestens einer im Innenraum (80, 280) eingebauten Kraftmesszelle (10, 210), wobei der Innenraum (80, 280) weigehend ein vom Gas der äusseren Atmosphäre unterscheidbares Gas aufweist, **dadurch gekennzeichnet dass** mindestens ein Sensor (50, 250, 251) im Innenraum (80, 280) des Gehäuses (20, 220) und/oder am Gehäuse (20, 220) und mit dem Innenraum in Verbindung stehend einen ausveichenden gasaustausch vom Innenraum zum Sensor (50, 250, 251) gewährleistend 251) gewährleistend angeordnet ist und wobei eine Recheneinheit (60, 206, 260), eine speichereinheit (64, 264) und eine Ausgabe (70, 207) vorhanden sind, wobei mit dem Sensor (50, 250, 251) mindestens ein Parameter der Gaszusammensetzung (90, 290) des im Innenraum (80, 280) befindlichen Gases und/oder dessen Änderung vermittels der thermischen Leitfähigkeit mindestens einer der Gaskomponenten der Gaszusammensetzung (90, 290) messbar ist, und daraus mindestens ein entsprechendes Sensorsignal erzeugbar ist, wobei das Sensorsignal in der Speichereinheit (64, 264) Speicherbar ist und/oder an die Recheneinheit und/oder an die Ausgabe über mittelbar ist,
und wobei die Recheneinheit ein Betriebsprogramm aufweist, mittels welchem das Sensorsignal (Sc) mit wenigstens einem Schwellwert (Kc) Kergleich bar ist und nach Überschneiten dieses Schwellwerts (Kc) eine entsprechende Belastung registrierbar ist und die Summe aller Belastungen (INT_{LTC}) berechenbar ist und durch Vergleich mit einem Maximalwert (MAX_{LTC}) der zulässigen Belastungen eine zulässige Restlebensdauer (R_{LTC}) berechenbar ist.

12. Kraftmessvorrichtung (100, 200) nach Anspruch 11 oder 12, **dadurch gekennzeichnet, dass** die Recheneinheit (60, 206) und/oder eine die Ausgabe (70, 207) enthaltende Ausgabeeinheit drahtlos oder drahtgebunden mit dem mindestens einen Sensor (50, 250, 251) verbunden sind.

13. Kraftmessvorrichtung (100, 200) nach Anspruch 11 oder 12 **dadurch gekennzeichnet, dass** die Kraftmessvorrichtung (100, 200) mindestens eine unabhängige Stromversorgung (66, 266), insbesondere eine Stützbatterie, aufweist, mit welcher die elektronischen Bauteile der Kraftmessvorrichtung (100, 200), insbesondere der Sensor (50, 250, 251), die Speichereinheit (64, 264) und die Recheneinheit (60, 260) versorgbar sind.

14. Kraftmessvorrichtung (100, 200) nach einem der Ansprüche 11 bis 13, **dadurch gekennzeichnet, dass** das Gehäuse weitgehend, mit einer Labyrinthdichtung, oder hermetisch gegen die umgebende Atmosphäre abgedichtet ist.

15. Kraftmessvorrichtung (100, 200) nach einem der Ansprüche 11 bis 14, **dadurch gekennzeichnet, dass** der Gasdruck im Innenraum dem äusseren Atmosphärendruck, gegebenenfalls mit einer Druckausgleichsvorrichtung, insbesondere einer Membrane, weitgehend angeglichen ist.

16. Kraftmessvorrichtung (100, 200) nach einem der Ansprüche 11 bis 15, **dadurch gekennzeichnet, dass** die Gaszusammensetzung (90, 290) im Wesentlichen aus den Komponenten Argon und Helium besteht.

## Claims

1. Method of monitoring and/or determining the condition of a force-measuring device (100, 200) with at least one housing (20, 220) enclosing an interior space (80, 280) and with at least one force-measuring cell (10, 210) installed in the interior space (80, 280) of the at least one housing (20, 220), wherein the interior space (80, 280) is filled to a large extent with a gas that is distinguishable from the gas of the outside atmosphere, **characterized in that** at least one sensor (50, 250, 251) is arranged in the interior space (80, 280) of the housing (20, 220) and/or arranged at the housing (20, 220) so as to communicate with the interior space (80, 280) and assure a sufficient gas circulation from the interior space to the sensor (50, 250, 251), wherein
• by means of the sensor (50, 250, 251) at least one parameter or a parameter change of the gas composition (90, 290) of the gas that is present in the interior space (80, 280) is measured through the thermal conductivity of at least one gas component that is present in the interior space,
• based on said measurement a corresponding sensor signal (S_{C}) is formed,
• the sensor signal (S_{C}) is stored in a memory unit (64, 264) and/or transmitted to a computing unit (60, 206, 260) and/or to an output device (70, 207),
• the sensor signal (S_{C}) is compared in the computing unit (60, 206, 260) to at least one threshold value (K_{C}) and, after said threshold value (K_{C}) has been exceeded, a corresponding load exposure is registered and the sum of all load exposures (INT_{LTC}) is calculated and, through comparison with a maximum value (MAX_{LTC}) of the permissible load exposures, a permissible remaining operating live (R_{LTC}) is calculated.

2. Method according to claim 1, **characterized in that** the sensor signal (S_{C}) and/or a sensor signal (S_{CX}) produced in the processing step is compared to at least one threshold value (K_{C}) and that after at least one decision criterion has been met, at least one corresponding event (E_{C}) is registered and transmitted to a memory unit (64, 264) and/or to a computing unit (60, 206, 260) and/or to an output device (70).

3. Method according to claim 1 or 2, **characterized in that** the parameter of the gas composition (90, 290) is measured continuously or periodically and/or at random.

4. Method according to one of the claims 1 to 3, **characterized in that** the sum of all load exposures (INT_{LTC}) that affect the force-measuring device (100, 200) is determined by integration of
a) the entire time profile of the sensor signals (S_{C}) of the at least one sensor or
b) the time profile of the sensor signals (S_{C}) of the at least one sensor after a threshold value (K_{C}) has been crossed, or
c) the time segments ((t₂-t₁)_{,} (t₄-t₃), (t₇-t₅)) during which the sensor signals (S_{C}) lie above the threshold value (K_{C}) or the threshold values (K_{C}),
and that after the maximum value (MAX_{LTC}) has been exceeded, the condition of the force-measuring device (100, 200) or the occurrence of exceeding the maximum value (MAX_{LTC}) is stored and/or transmitted to the output device.

5. Method according to one of the claims 1 to 4, **characterized in that** the sensor signal (S_{C}) which is delivered to the output device (70, 207) or the output signal (S_{CX}) of the computing unit triggers an alarm and/or interrupts a measurement process and/or cancels a readiness message.

6. Method according to one of the claims 1 to 5, **characterized in that** the at least one sensor signal (S_{C}) or the output signal (S_{CX}) of the computing unit initiates an automatic calibration process (A_{C}) of the force-measuring cell (10, 210) or requests a manual calibration (M_{C}) to be performed by the user or manufacturer.

7. Method according to one of the claims 1 to 6, **characterized in that** the sum of all load exposures (INT_{LTC}) or the remaining operating live (R_{LTC}) is either recalled by way of the output device (70, 207) from the computing unit (60, 206, 260) or the memory unit (64, 264), or the computing unit (60, 206, 260) automatically transmits this information to the output device (70, 207) in the form of output signals every time a corresponding load exposure is registered.

8. Method according to one of the claims 1 to 7, **characterized in that** the at least one sensor (50, 250, 251) is validated by at least periodically checking its sensor signals (S_{C}) that are transmitted to the computing unit (60, 206, 260), wherein the checking consists of comparing the sensor signals (S_{C}) in the computing unit (60, 206, 260) with verification values and verification tolerance values that are stored in the computing unit (60, 206, 260) and wherein, if the verification values and/or verification tolerance values are found to be violated, an error is registered and transmitted to the output device (70, 207).

9. Method according to one of the claims 1 to 8, **characterized in that** at least one sensor signal (S_{C}) is determined prior to the delivery of the force-measuring device (100, 200), that said sensor signal (S_{C}) is stored in the computing unit as a reference value, and that at least after delivery of the force-measuring cell, at least on sensor signal (S_{C}) is determined with the sensor (50, 250, 251) associated with said reference value and the latter sensor signal (S_{C}) is compared to said reference value.

10. Method according to one of the claims 1 to 9, **characterized in that** the electronic components of the force-measuring device (100, 200), in particular the sensor (50, 250, 251), the memory unit (64, 264) and the computing unit (60, 260) are supplied with current by an additional, independent power supply unit (66, 266), in particular a back-up battery.

11. Force-measuring device (100, 200), operable to perform the method according to claim 1, with at least one housing (20, 220) that has an interior space (80, 280) and at least one force-measuring cell (10, 210) installed in said interior space (80, 280), wherein the interior space (80, 280) to a large extent comprises a gas that is distinguishable from the gas of the ambient atmosphere, **characterized in that** at least one sensor (50, 250, 251) is arranged in the interior space (80, 280) of the housing (20, 220) and/or arranged at the housing (20, 220) so as to communicate with the interior space (80, 280) and assure a sufficient gas circulation from the interior space to the sensor (50, 250, 251), wherein a computing unit (60, 206, 260), a memory unit (64, 264) and an output device (70, 207) are at hand, wherein the sensor (50, 250, 251) is operable to measure at least one parameter or a parameter change of the gas composition (90, 290) of the gas that is present in the interior space (80, 280) through the thermal conductivity of at least one gas component that is present in the interior space and, based on said measurement, to generate at least one corresponding sensor signal (S_{C}), wherein said sensor signal (S_{C}) can be stored in the memory unit (64, 264) and/or transmitted to the computing unit (60, 206, 260) and/or to the output device (70, 207), and wherein the computing unit comprises an operating program by means of which the sensor signal (S_{C}) can be compared to at least one threshold value (K_{C}) and, after said threshold value (K_{C}) has been exceeded, a corresponding load exposure can be registered and the sum of all load exposures (INT_{LTC}) can be calculated and, through comparison with a maximum value (MAX_{LTC}) of the permissible load exposures, a permissible remaining operating live (R_{LTC}) can be calculated.

12. Force-measuring device (100, 200) according to claim 11, **characterized in that** the computing unit (60, 206) and/or an output unit which comprises the output device (70, 207) is connected to the at least one sensor (50, 250, 251) through either a wireless connection or a wire-bound connection.

13. Force-measuring device (100, 200) according to claim 11 or 12, **characterized in that** the force-measuring device (100, 200) comprises at least one independent power supply (66, 266), in particular a back-up battery which is operable to supply the electronic components of the force-measuring device (100, 200), in particular the sensor (50, 250, 251), the memory unit (64, 264) and the computing unit (60, 260).

14. Force-measuring device (100, 200) according to one of the claims 11 to 13, **characterized in that** the housing is sealed to a large extent against the ambient atmosphere, for example by a labyrinth baffle or by a hermetic seal.

15. Force-measuring device (100, 200) according to one of the claims 11 to 14, **characterized in that** the gas pressure in the interior space is to a large extent matched to the ambient atmospheric pressure, using if necessary a pressureequalizing device, in particular a diaphragm.

16. Force-measuring device (100, 200) according to one of the claims 11 to 15, **characterized in that** the gas composition (90, 290) consists substantially of the components argon and helium.

## Revendications

1. Procédé pour surveiller et/ou déterminer l'état d'un dispositif de mesure de force (100, 200) comprenant au moins un boîtier (20, 220) présentant un espace intérieur (80, 280) et au moins une cellule dynamométrique (10, 210) intégrée dans l'espace intérieur (80, 280) du au moins un boîtier (20, 220), l'espace intérieur (80, 280) étant rempli essentiellement avec un gaz pouvant être différencié du gaz de l'atmosphère extérieure, **caractérisé en ce qu'**au moins un capteur (50, 250, 251) est disposé dans l'espace intérieur (80, 280) du boîtier (20, 220) et/ou sur le boîtier (20, 220) et est en liaison avec l'espace intérieur (80, 280) en garantissant un échange de gaz suffisant de l'espace intérieur vers le capteur (50, 250, 251),
• au moins un paramètre de la composition de gaz (90, 290) du gaz se trouvant dans l'espace intérieur (80, 280) et/ou sa variation étant mesurés au moyen du capteur (50, 250, 251) au moyen de la conductibilité thermique d'au moins une composante de gaz présente dans l'espace intérieur,
• au moins un signal de capteur correspondant (S_{C}) étant formé à partir de là,
• le signal de capteur (S_{C}) étant mémorisé dans une unité de mémoire (64, 264) et/ou étant transmis à une unité de calcul (60, 206, 260) et/ou à une sortie (70, 207),
• le signal de capteur (S_{C}) étant comparé dans l'unité de calcul (60, 206, 260) avec au moins une valeur seuil (K_{C}) et, après dépassement de cette valeur seuil (K_{C}), une sollicitation correspondante étant enregistrée et la somme de toutes les sollicitations (INT_{LTC}) étant calculée et une durée de vie résiduelle (R_{LTC}) autorisée étant calculée par comparaison avec une valeur maximale (MAX_{LTC}) des sollicitations autorisées.

2. Procédé selon la revendication 1, **caractérisé en ce que** le signal de capteur (S_{C}) et/ou un signal de capteur (S_{CX}) généré à partir d'une étape de traitement est comparé avec au moins une valeur seuil (K_{C}) et au moins un évènement correspondant (E_{C}) est enregistré après avoir satisfait à au moins un critère de décision et est transmis à l'unité de mémorisation (64, 264) et/ou l'unité de calcul (60, 206, 260) et/ou à la sortie (70).

3. Procédé selon la revendication 1 ou 2, **caractérisé en ce que** le paramètre de la composition de gaz (90, 290) est déterminé de façon continue ou périodique et/ou aléatoire.

4. Procédé selon l'une des revendications 1 à 3, **caractérisé en ce que** le total de toutes les sollicitations (INT_{LTC}), qui agissent sur le dispositif de mesure de force (100, 200), est déterminé par intégration
a) de l'ensemble de la courbe des signaux de capteur (S_{C}) ou
b) de la courbe des signaux de capteur (S_{C}) après dépassement d'une valeur seuil (K_{C}) ou
c) des intervalles de temps ((t₂-t₁), (t₄-t₃), (t₇-t₅)), pendant lesquels les signaux de capteur (S_{c} se situent au-dessus de la ou des valeurs seuils (K_{c}),
et **en ce que**, après le dépassement de la valeur maximale (MAX_{LTC}), l'état du dispositif de mesure de force (100, 200) respectivement le dépassement de la valeur maximale (MAX_{LTC}) est mémorisé ou est transmis à la sortie.

5. Procédé selon l'une des revendications 1 à 4, **caractérisé en ce que** le signal de capteur (S_{C}) amené à la sortie (70, 207) ou le signal de sortie de l'unité de calcul (S_{CX}) déclenche une mise en alerte et/ou interrompt une opération de mesure et/ou supprime un affichage de disponibilité.

6. Procédé selon l'une des revendications 1 à 5, **caractérisé en ce que** le au moins un signal de capteur (S_{C}) ou le signal de sortie de l'unité de calcul (S_{CX}) déclenche une opération de calibrage automatique (A_{C}) de la cellule de mesure de force (10, 210) ou bien exige de l'utilisateur un calibrage (M_{C}) effectué manuellement.

7. Procédé selon l'une des revendications 1 à 6, **caractérisé en ce que** le total des sollicitations respectivement la durée de vie résiduelle (R_{LTC}) est interrogé par la sortie (70, 207) de l'unité de calcul (60, 206, 260) ou de l'unité de mémoire (64, 264) ou bien l'unité de calcul (60, 206, 260) transmet automatiquement, lors de chaque enregistrement d'une sollicitation correspondante, ces indications sous forme de signaux de sortie à la sortie (70, 207).

8. Procédé selon l'une des revendications 1 à 7, **caractérisé en ce que**, pour le contrôle du au moins un capteur (50, 250, 251), ses signaux de capteur (S_{C}) transmis à l'unité de calcul (60, 206, 260) sont contrôlés au moins périodiquement dans l'unité de calcul (60, 206, 260) par une comparaison avec des valeurs de vérification et des valeurs de tolérance de vérification mémorisées dans l'unité de calcul (60, 206, 260), et une erreur est enregistrée en cas d'écart par rapport à ces valeurs de vérification ou lors de la variation des valeurs de tolérance de vérification et est transmise à la sortie (70, 207).

9. Procédé selon l'une des revendications 1 à 8, **caractérisé en ce qu'**au moins un signal de capteur (S_{C}) est déterminé avant la livraison du dispositif de mesure de force (100, 200), **en ce que** ledit signal de capteur (S_{C}) est mémorisé en tant que valeur de référence dans l'unité de calcul et **en ce qu'**au moins après la livraison de la cellule de mesure de force, au moins un signal de capteur (S_{C}) est déterminé avec le capteur (50, 250, 251) attribué à la valeur de référence et ce signal de capteur (S_{C}) est comparé avec la valeur de référence.

10. Procédé selon l'une des revendications 1 à 9, **caractérisé en ce que** les composants électroniques du dispositif de mesure de force (100, 200), en particulier le capteur (50, 250, 251), l'unité de mémoire (64, 264) et l'unité de calcul (60, 260) sont alimentés en électricité par une unité d'alimentation électrique (66, 266) indépendante supplémentaire, en particulier une batterie de soutien.

11. Dispositif de mesure de force (100, 200) pour la mise en oeuvre du procédé selon la revendication 1, comprenant un boîtier (20, 220) présentant un espace intérieur (80, 280) et au moins une cellule de mesure de force (10, 210) intégrée dans l'espace intérieur (80, 280), l'espace intérieur (80, 280) présentant essentiellement un gaz pouvant être différencié du gaz de l'atmosphère extérieure, **caractérisé en ce qu'**au moins un capteur (50, 250, 251) est disposé dans l'espace intérieur (80, 280) du boîtier (20, 220) et/ou sur le boîtier (20, 220) et en liaison avec l'espace intérieur, en garantissant un échange de gaz suffisant de l'espace intérieur vers le capteur (50, 250, 251) et une unité de calcul (60, 206, 260), une unité de mémoire (64, 264) et une sortie (70, 207) étant présentes, au moins un paramètre de composition de gaz (90, 290) du gaz se trouvant dans l'espace intérieur (80, 280) et/ou sa variation pouvant être mesurés pouvant être mesuré avec le capteur au moyen de la conductibilité thermique d'au moins l'un des composants de gaz de la composition de gaz (90, 290), et au moins un signal de capteur approprié pouvant être généré à partir de là, le signal de capteur pouvant être mémorisé dans l'unité de mémoire (64, 264) et/ou pouvant être transmis à l'unité de calcul et/ou à la sortie,
et l'unité de calcul présentant un programme de service, au moyen duquel le signal de capteur (S_{C}) peut être comparé avec au moins une valeur seuil (K_{C}) et après une sollicitation correspondante peut être enregistré après le dépassement de cette valeur seuil (K_{C}) et le total de toutes les sollicitations (INT_{LTC}) pouvant être calculé et une durée de vie résiduelle autorisée (R_{LTC}) pouvant être calculée par comparaison avec une valeur maximale (MAX_{LTC}) des sollicitations autorisées.

12. Dispositif de mesure de force (100, 200) selon la revendication 11, **caractérisé en ce que** l'unité de calcul (60, 206) et/ou une unité de sortie contenant la sortie (70, 207) sont reliées sans fil ou reliées par fil à au moins un capteur (50, 250, 251).

13. Dispositif de mesure de force (100, 200) selon la revendication 11 ou 12, **caractérisé en ce que** le dispositif de mesure de force (100, 200) présente au moins une alimentation électrique (66, 266) indépendante, en particulier une batterie de soutien, avec laquelle les composants électroniques du dispositif de mesure de force (100, 200), en particulier le capteur (50, 250, 251), l'unité de mémoire (64, 264) et l'unité de calcul (60, 260) peuvent être alimentés.

14. Dispositif de mesure de force (100, 200) selon l'une des revendications 11 à 13, **caractérisé en ce que** le boîtier est étanchéifié essentiellement, avec un joint à labyrinthe, ou de façon hermétique vis-à-vis de l'atmosphère ambiante.

15. Dispositif de mesure de force (100, 200) selon l'une des revendications 11 à 14, **caractérisé en ce que** la pression de gaz dans l'espace intérieur est essentiellement adapté à la pression atmosphérique extérieure, éventuellement avec un dispositif d'équilibrage de pression, en particulier une membrane.

16. Dispositif de mesure de force (100, 200) selon l'une des revendications 11 à 15, **caractérisé en ce que** la composition du gaz (90, 290) se compose principalement des composants argon et hélium.
